Europäisches Patentamt

European Patent Office

Office européen des brevets

(19)

(11) Numéro de publication : **0 131 496**
**B1**

(12) **FASCICULE DE BREVET EUROPÉEN**

(45) Date de publication du fascicule du brevet :
29.07.87

(21) Numéro de dépôt : **84401277.3**

(22) Date de dépôt : **20.06.84**

(51) Int. Cl.⁴ : **F 16 D 55/224**, F 16 D 55/26,
F 16 D 3/06, F 16 D 65/12

(54) **Frein multi-disque perfectionné.**

(30) Priorité : **30.06.83 FR 8310917**

(43) Date de publication de la demande :
**16.01.85 Bulletin 85/03**

(45) Mention de la délivrance du brevet :
**29.07.87 Bulletin 87/31**

(84) Etats contractants désignés :
**DE GB IT NL SE**

(56) Documents cités :
**DE-A- 2 043 911
DE-A- 3 142 941
FR-A- 699 993
FR-A- 1 074 902
FR-A- 1 319 456
FR-A- 1 547 663
FR-A- 2 410 764
GB-A- 1 087 988
GB-A- 2 049 845
US-A- 3 008 547
US-A- 3 435 936**

(73) Titulaire : **BENDIX France
126, rue de Stalingrad
F-93700 Drancy (FR)**

(72) Inventeur : **Carré, Jean Jacques
59 Boulevard de l'Est
F-93340 Le Raincy (FR)**
Inventeur : **Escarabajal, Ghislain
4 Sente de la Loge Chauconin Neufmontiers
F-77100 Meaux (FR)**

(74) Mandataire : **Poidatz, Emmanuel et al
Service Brevets Bendix 44 rue François 1er
F-75008 Paris (FR)**

EP 0 131 496 B1

## Description

L'invention se rapporte aux freins à disque, plus particulièrement aux freins multidisques, comprenant au moins un disque rotatif monté sur un moyeu avec possibilité de coulissement parallèlement à la direction de l'axe commun au disque et au moyeu, un ensemble de garnitures de friction susceptibles d'être appliquées en engagement avec le disque par un disque positif d'actionnement, le disque étant porté par un manchon comportant des cannelures intérieures coopérant avec des cannelures extérieures du moyeu.

Un frein à disque de ce type est décrit dans le document GB-A-2 049 845.

Lorsque les cannelures coopérantes ont des flancs plans radiaux, le manchon portant le disque se trouve guidé dans de bonnes conditions au cours de ses mouvements de translation sur le moyeu. On constate cependant que, après un certain temps de fonctionnement du frein, les cannelures ont tendance à se mater, ce qui accroît les frottements et peut conduire à un blocage du manchon, donc du disque qu'il porte, introduisant de graves perturbations dans le fonctionnement du frein. En outre, de telles cannelures doivent être réalisées par brochage, mode d'usinage onéreux.

C'est pourquoi, de façon en soi connue, on donne aux flancs des cannelures une forme galbée à la manière de dents d'engrenages, de sorte que les flancs de deux cannelures adjacentes du manchon et du moyeu ne sont en contact que suivant une ligne sensiblement parallèle à l'axe.

Un autre inconvénient apparaît alors, lorsque les garnitures de freinage sont localisées sur un secteur angulaire limité du pourtour des disques, comme c'est le cas pour les freins selon la présente invention, qui sont appelés à subir des actionnements violents répétés, tels que les freins de poids lourds, dont les disques doivent offrir une surface exposée à l'air libre aussi grande que possible en vue de leur refroidissement. Au cours d'une opération de freinage, le disque coulissant, sollicité en translation uniquement dans la région du secteur couvert par les garnitures, a tendance à basculer, son manchon porteur prenant une certaine obliquité par rapport à l'axe qui peut conduire de nouveau à un blocage du fait des pentes des flancs non radiaux des cannelures.

La présente invention a pour objet de proposer des perfectionnements aux freins du type défini en premier et pourvus de formes de cannelures mentionnées ci-dessus évitant les inconvénients inhérents à ces formes de cannelures et permettant donc de réaliser un frein à disque coulissant fiable, robuste et de faibles coûts de fabrication.

Pour ce faire, selon l'invention, le frein est caractérisé, de façon donc en soi connue, en ce que les cannelures coopérantes ont des flancs galbés à la manière de dents d'engrenages de sorte que les flancs de deux cannelures adjacentes du manchon et du moyeu ne sont en contact que suivant une ligne sensiblement parallèle audit axe, et est caractérisé de plus en ce que le disque est monté sur une couronne centrale du manchon, et en ce qu'il est prévu, de part et d'autre, axialement, de la couronne, un agencement de guidage radial du manchon sur le moyeu consistant en une surface annulaire appartenant à l'un des éléments moyeu/manchon en coulissement mutuel, en contact de glissement avec une surface annulaire conjuguée appartenant à l'autre élément, l'une de ces surfaces annulaires étant située à l'intérieur de l'autre.

Un tel agencement assure le centrage du manchon par ses extrémités axiales, de part et d'autre du disque, indépendamment des flancs des cannelures, le manchon se trouvant ainsi guidé d'une manière parfaite sur le moyeu, sans risque de prendre une obliquité néfaste, les flancs des cannelures étant totalement déchargés de la tâche de guidage radial du manchon.

Le document FR-A-699 993 (de 1929) décrit un montage de pignon baladeur de boîte de vitesses sur un arbre cannelé à cannelures droites dans lequel, pour assurer un centrage correct du pignon sur l'arbre sans nécessiter un usinage précis des fonds de cannelures, des bagues sont interposées entre les cannelures de l'arbre et les extrémités du moyeu du pignon. Un pignon d'engrenage est soumis, en engrènement, à des contraintes radiales qui nécessitent en effet un centrage très précis du pignon, faute de quoi des usures différentielles pourraient apparaître dans certaines des dents de l'engrenage. Toutefois, un tel pignon baladeur n'est pas soumis à des forces de freinage axiales localisées et ne présente donc pas de risques de basculement par rapport à son axe. D'autre part, l'accouplement en rotation du pignon et de l'arbre ne transmettant pas des variations de couple importantes, les risques de matage des cannelures sont pratiquement inexistants.

Selon des caractéristiques particulières de l'invention, les surfaces annulaires conjuguées peuvent être des surfaces continues, les cannelures du manchon et du moyeu étant interrompues dans la région de ces surfaces, mais elles peuvent aussi comprendre une surface annulaire continue, les cannelures de l'élément qui la comporte étant interrompues dans la région de cette surface, et une surface annulaire discontinue formée par les sommets des cannelures de l'autre élément. Dans ce dernier cas, de préférence, la surface continue est solidaire du manchon et coopère avec les sommets des cannelures du moyeu.

Chaque surface annulaire continue peut être obtenue par usinage dans la masse du manchon ou du moyeu. Elle peut aussi être constituée par la surface annulaire (interne ou externe suivant qu'il s'agit du manchon ou du moyeu) d'une bague rapportée, avantageusement en bronze.

D'autres caractéristiques et avantages de l'invention ressortiront plus clairement de la description qui va suivre, en regard des dessins annexés, d'un exemple de réalisation non limitatif.

La figure 1 représente, en coupe axiale, un frein à disques agencé conformément à l'invention.

La figure 2 représente une section partielle suivant la ligne II-II de la figure 1.

La figure 3 représente à plus grande échelle, des cannelures parmi celles qui apparaissent sur la figure 2.

La figure 4 représente une section partielle suivant la ligne IV-IV de la figure 1.

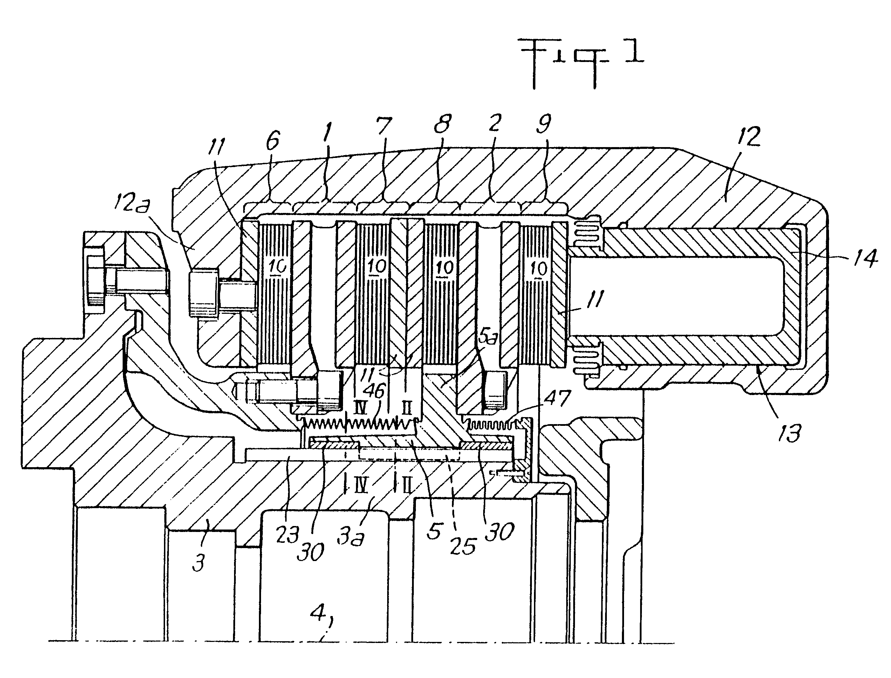

Le frein multidisque représenté sur la figure 1 comporte un premier disque rotatif 1 dit extérieur et un second disque rotatif 2 dit intérieur, tous deux montés sur un moyeu 3 dont l'axe 4 coïncide avec ceux des disques 1 et 2. Tandis que le disque 1 est solidaire du moyeu 3, donc fixe dans la direction de l'axe 4, le disque 2 peut se déplacer suivant cette direction, étant fixé à un manchon 5 cannelé intérieurement qui peut coulisser sur une partie cylindrique cannelée 3a du moyeu autour de laquelle il est engagé, son entraînement en rotation par le moyeu étant assuré par l'engrènement de ses cannelures 25 avec les cannelures 23 du moyeu 3.

Chaque disque de frein 1 ou 2 coopère avec une paire de patins de friction 6 et 7 ou 8 et 9 disposés de part et d'autre du disque de frein 1 ou 2 correspondant et susceptibles d'être appliqués contre les faces latérales de celui-ci. Chacun de ces patins de friction 6, 7, 8, 9 comprend une garniture de friction 10 et une plaque porte-garniture 11, chaque garniture 10 coopérant avec la face adjacente du disque 1 ou 2 correspondant.

Un étrier 12 est disposé par-dessus les disques de frein 1, 2 et leurs patins de friction 6, 7, 8, 9 de façon à coiffer l'ensemble disques-patins. Dans la partie de l'étrier 12 située du côté du disque intérieur 2 est prévu un moteur de commande tel qu'un vérin hydraulique 13 dont le piston 14 est susceptible d'agir sur la plaque porte-garniture 11 du patin intérieur 9 et, par réaction et grâce à son nez échancré 12a, sur la plaque porte-garniture 11 du patin extérieur 6, de manière à commander le serrage de l'ensemble disques-patins suivant la direction de l'axe 4 et à faire ainsi naître une friction de freinage entre chaque garniture 10 et la face de disque conjuguée. Cette action s'accompagne d'un déplacement du disque intérieur 2 parallèlement à l'axe 4 par coulissement du manchon 5 sur la partie 3a du moyeu 3, dont les cannelures, parallèles à l'axe 4, sont protégées des salissures qui pourraient les encrasser par des soufflets souples 46, 47 de forme cylindrique enveloppant le manchon 5 et la partie 3a du moyeu de part et d'autre de la couronne 5a de fixation du disque 2 au manchon 5.

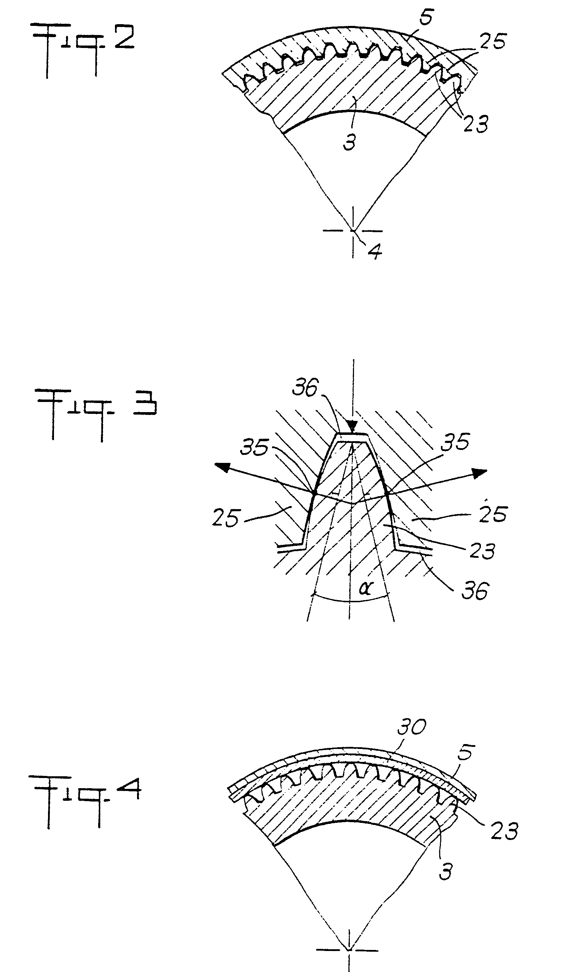

Pour éviter tout risque de coincement mutuel des cannelures 23, 25 par matage, ce qui conduirait à un blocage en direction axiale du disque coulissant 2, les flancs des cannelures sont non pas plans et radiaux mais galbés (fig. 3) à la manière des dents d'engrenages en développante de cercle. Les flancs coopérant des cannelures 23, 25 sont alors en contact non pas par des surfaces, mais suivant des lignes 35 sensiblement parallèles à l'axe 4, un intervalle 36 étant ménagé entre le sommet de chaque cannelure et le fond de l'intervalle séparant les deux cannelures opposées adjacentes.

Mais, étant donné que les garnitures de freinage 10 ne couvrent qu'un secteur angulaire limité (d'environ 60°) sur le pourtour des disques 1, 2, l'effort de compression engendré par le vérin 13 et l'étrier 12 ne s'exerce sur les disques que dans ce secteur, ce qui tend à faire basculer le disque coulissant 2 et son manchon support 5 par rapport à l'axe 4. Pour éviter que l'angle de contact α des cannelures 23, 25 crée alors, par effet de coin, un arc-boutement du manchon 5 sur le moyeu 3, d'où de nouveau un blocage du disque 2, le manchon 5 est pourvu, à chacune de ses extrémités, d'une bague de guidage 30 qui prend appui par sa surface annulaire interne sur les sommets des cannelures 23 du moyeu 3 (fig. 4), les cannelures 25 du manchon 5 étant raccourcies pour donner place auxdites bagues 30. Ce sont ces bagues de guidage qui reprennent le couple de basculement imprimé par le disque 2 au manchon 5, de sorte que tous efforts parasites dans les cannelures susceptibles de créer un coincement sont éliminés.

Bien entendu, les cannelures 23 du moyeu ont une longueur suffisante pour fournir un appui à l'entière surface interne des bagues 30 du manchon 5, quelle que soit la position que peut prendre le disque coulissant 2 au cours d'une opération de freinage.

**Revendications**

1. Frein à disque, comprenant au moins un disque rotatif (2) monté sur un moyeu (3) avec possibilité de coulissement parallèlement à la direction de l'axe commun au disque et au moyeu, un ensemble de garnitures de friction (10) susceptibles d'être appliquées en engagement avec le disque par un dispositif d'actionnement (13), les garnitures ne s'étendant que sur un secteur angulaire limité du pourtour du disque, le disque étant porté par un manchon (5) comportant des cannelures intérieures (25) coopérant avec des cannelures extérieures (23) du moyeu, caractérisé en ce que les cannelures coopérantes (23, 25) ont des flancs galbés à la manière de dents d'engrenages de sorte que les flancs de deux cannelures adjacentes du manchon et du moyeu ne sont en contact que suivant une ligne (35) sensiblement parallèle audit axe, en ce que le disque (2) est monté sur une couronne (5a) centrale du manchon, et en ce qu'il est prévu, de part et d'autre, axialement, de la couronne (5a), un agencement de guidage radial du manchon sur le moyeu consistant en une surface annulaire appartenant à l'un des éléments (moyeu 3 ; manchon 5) en coulissement mutuel, en contact de glissement avec une surface annulaire conjuguée appartenant à l'autre élément (5, 3), l'une de ces surfaces annulaires étant située à l'intérieur de l'autre.

2. Frein selon la revendication 1, caractérisé en ce que l'agencement de guidage radial consiste en deux surfaces annulaires continues, les cannelures (25, 23) du manchon (5) et du moyeu (3) étant interrompues dans la région de ces surfaces conjuguées.

3. Frein selon la revendication 1, caractérisé en ce que l'agencement de guidage radial consiste en une surface annulaire continue, les cannelures de l'élément qui la comporte étant interrompues dans la région de cette surface, et en une surface annulaire discontinue formée par les sommets des cannelures de l'autre élément.

4. Frein selon la revendication 3, caractérisé en ce que la surface continue appartient au manchon (5) et coopère avec les sommets des cannelures extérieures (23) du moyeu (3).

5. Frein selon l'une quelconque des revendications 2 à 4, caractérisé en ce qu'au moins une surface annulaire continue est réalisée par usinage dans la masse du manchon (5) ou du moyeu (3).

6. Frein selon l'une quelconque des revendications 2 à 5, caractérisé en ce qu'au moins une surface annulaire est formée par une bague (30) rapportée dans le manchon (5) ou sur le moyeu (3).

7. Frein selon la revendication 6, caractérisé en ce que la bague (30) est en bronze.

**Claims**

1. Disc brake comprising at least one rotating disc (2) mounted on a hub (3) so as to be able to slide parallel to the direction of the axis common to the disc and the hub, an assembly of friction members (10) adapted to be moved into engagement with the disc by an actuating device (13), the friction members extending only about a limited angular sector of the circumference of the disc, the disc being supported by a sleeve (5) comprising internal serrations (25) cooperating with external serrations (23) of the hub, characterized in that the co-operating serrations (23, 25) have curved flanks in the manner of gear teeth such that the flanks of two adjacent serrations of the sleeve and hub are in contact only along a line (35) substantially parallel to said axis, in that the disc (2) is mounted on a central collar (5a) of the sleeve, and in that there is provided axially on either side of the collar (5a) means for radially guiding of the sleeve on the hub, said means comprising an annular surface associated to the one of the mutually sliding elements (hub 3 ; sleeve 5) in sliding contact with a complementary annular surface associated to the other element (5, 3), the one of said annular surfaces being situated within the other one.

2. Brake according to claim 1, characterized in that the radial guiding means consists of two continuous annular surfaces, the serrations (25, 23) of the sleeve (5) and the hub (3) being interrupted in the region of said complementary surfaces.

3. Brake according to claim 1, characterized in that the radial guiding means consists of a continuous annular surface, the serrations of the element which it comprises being interrupted in the region of said surface, and of a discontinuous annular surface formed by the tops of the external serrations (23) of the hub (3).

4. Brake according to claim 3 characterized in that the continuous surface belongs to the sleeve (5) and cooperates with the tops of the external serrations (23) of the hub (3).

5. Brake according to any of claims 2 to 4 characterized in that at least one continuous annular surface is formed by machining in the material of the sleeve (5) or the hub (3).

6. Brake according to any of claims 2 to 5 characterized in that at least one annular surface is formed by a ring (30) mounted in the sleeve (5) or on the hub (3).

7. Brake according to claim 6, characterized in that the ring (30) is of bronze.

**Patentansprüche**

1. Scheibenbremse mit mindestens einer umlaufenden Bremsscheibe (2), die auf einer Nabe (3) so gelagert ist, daß sie parallel zur Richtung der gemeinsamen Achse von Bremsscheibe und Nabe gleiten kann, einer Anordnung von Bremsbacken (10), die durch eine Betätigungsvorrichtung (13) in Anlage mit der Bremsscheibe drückbar sind, wobei sich die Bremsbacken nur über einen begrenzten Winkelsektor des Umfangs der Bremsscheibe erstrecken, wobei die Bremsscheibe von einer Hülse (5) mit inneren Nuten (25) getragen wird, die mit äußeren Nuten (23) der Nabe zusammenwirken, dadurch gekennzeichnet, daß die zusammenwirkenden Nuten (23, 25) gewölbte Seitenflächen nach Art einer Zahnradverzahnung haben, derart, daß die Flanken zweier benachbarter Nuten der Hülse und der Nabe nur entlang einer im wesentlichen zu der besagten Achse parallelen Linie (35) in Berührung stehen, daß die Bremsscheibe (20) auf einem zentralen Kranz (5a) der Hülse gelagert ist, und daß axial beidseitig zu dem Kranz (5a) eine Einrichtung zur radialen Führung der Hülse auf der Nabe vorgesehen ist, welche aus einer Ringfläche besteht, die zu einem der relativ zueinander gleitenden Elemente (Nabe 3 ; Hülse 5) gehört und mit einer zu dem anderen Element (5, 3) gehörenden komplementären Ringfläche in Gleitberührung steht, wobei eine dieser Ringflächen innerhalb der anderen angeordnet ist.

2. Bremse nach Anspruch 1, dadurch gekennzeichnet, daß die Radialführungseinrichtung aus zwei kontinuierlichen Ringflächen besteht, wobei die Nuten (25, 23) der Hülse (5) und der Nabe (3) in dem Bereich dieser komplementären Flächen unterbrochen sind.

3. Bremse nach Anspruch 1, dadurch gekennzeichnet, daß die Radialführungseinrichtung aus einer kontinuierlichen Ringfläche und einer diskontinuierlichen Ringfläche besteht, wobei die Nuten des die kontinuierlichen Ringfläche bildenden Elementes in dem Bereich dieser Fläche unterbrochen sind und die diskontinuierliche Ringfläche von den Spitzen der Zähne des anderen Elementes gebildet wird.

4. Bremse nach Anspruch 3, dadurch gekennzeichnet, daß die kontinuierliche Fläche zu der Hülse (5) gehört und mit den Spitzen der äußeren Zähne (23) der Nabe (3) zusammenwirkt.

5. Bremse nach einem der Ansprüche 2-4, dadurch gekennzeichnet, daß zumindest eine kontinuierliche Ringfläche durch spanabhebende Bearbeitung im Material der Hülse (5) oder der Nabe (3) gebildet ist.

6. Bremse nach einem der Ansprüche 2-5, dadurch gekennzeichnet, daß zumindest eine Ringfläche von einem Ring (30) gebildet wird, der an der Hülse (5) oder an der Nabe (3) angebracht ist.

7. Bremse nach Anspruch 6, dadurch gekennzeichnet, daß der Ring (30) aus Bronze besteht.

Fig 1

0 131 496

Fig. 2

5
25
3
23
4

Fig. 3

36
35        35
25              25
23
α        36

Fig. 4

30
5
23
3